# EUROPEAN PATENT APPLICATION

(11) **EP 4 625 730 A2**
(43) Date of publication of application: **01.10.2025**
(21) Application number: 25166163.3
(22) Date of filing: 25.03.2025
(51) Int. Cl.: H02G 3/00, F16L 3/10, F16L 3/23, H02G 3/32

(54) **BRACKET FOR SUPPORTING A SET OF CABLES AND FIXING ASSEMBLY COMPRISING SAID BRACKET**

(30) Priority: 27.03.2024 ES 202430607 U
(71) Applicant: CELO Fijaciones, S.L., 08211 Castellar del Valles (Barcelona) (ES)
(72) Inventor: COPETE VILELLA, Angel, 08222 Terrassa (ES); GONZALEZ CONTIJOCH, Oriol, Castellar del Valles (ES); GOMEZ GONZALES, Henry, 08232 Viladecavalls (ES)
(74) Representative: Ponti & Partners, S.L.P

(57) **Abstract**

Bracket being defined by a piece (1, 2), which comprises: a first portion (11, 21) of piece (1, 2) provided with at least one through hole (110, 210, 220) to fix the said first portion (11, 21) of piece (1, 2) by standard fixing means (T), a second portion (12, 22) of piece (1, 2) that extends to configure a bracket surface for a said set of cables, the second portion (12, 22) of piece (1, 2) being provided with at least one access window (14, 24) to the said at least one through hole (110, 210, 220). It is characterised in that the first portion (11,21) of piece (1, 2) comprises centring and fastening means (131, 231, 232) arranged adjacent to the at least one through hole (110, 210, 220) and intended to centre and fasten the bracket to a tool (C) of the direct impact fixing means. Fig.5.

## Description

The present invention relates to a bracket of the type that supports cables that run along walls and ceilings. It also relates to a fixing assembly comprising said bracket and a tool of a direct impact fixing means. For example, said tool may be a nose part of an electrical or pneumatic nail gun.

### Background of the invention

Cable supports that are fixed to ceilings or walls by screws or nails are known in the market. For example, document DE29503361A discloses a cable bracket which comprises a first portion with a through hole, which allows fixing the bracket to surfaces utilising a standard screw, and a second portion with a window allowing access to a screwdriver. Similar solutions are disclosed in documents EP0556572A, DE9109806A, and ES2547134A.

On the other hand, document WO2023110568A discloses a cable bracket that includes an accessory piece intended to enable the fixing of the bracket by using direct impact fixing tools, such as gas nailing guns or tools.

Considering the localised state of the art, a solution that allows and facilitates the attaching of the bracket to walls and ceilings both with standard screws and with direct impact fixing tools is desirable, without the need to add accessory pieces that make the product more expensive and increase the handling time.

### Description of the invention

The objective of this invention is to provide a suitable bracket for supporting one or more cables on walls and ceilings in a more versatile and economical manner than the state of the art.

To this end, according to a first aspect, the present invention provides a bracket for supporting a set of cables wherein said bracket is defined by a piece which comprises:
- a first portion of piece provided with at least one through hole to fix the said first portion of piece to a surface of a wall or ceiling by standard fixing means, such as a screw and plug assembly wherein the screw is inserted into a plug arranged in the wall or ceiling,
- a second portion of piece which extends from one end of the first portion of piece towards the other end of this first portion of piece to configure a bracket surface for a set of cables, the second portion of piece being provided with at least one access window to the at least one through hole, wherein the said window is dimensioned to allow access of a tool of a direct impact fixing means, such as the mouth or nose part of a gas or electric nail gun, and
- closing means for removably attaching the first portion of piece to the second portion of piece.

The bracket is characterised by the fact that the first portion of piece comprises centring and fastening means arranged adjacent to the said through hole and intended to centre and fasten the bracket to the direct impact fixing tool.

According to a second aspect, the present invention provides a fixing assembly comprising the claimed cable bracket and a tool of a direct impact fixing means, wherein said tool is configured and dimensioned to be able to access said window for the piece of said bracket to be centred and fastened to the tool by said centring and fastening means of the bracket arranged adjacent to the at least one through hole.

Thanks to this configuration, a cable bracket is obtained that can be fixed to a surface, either ceiling or wall, by any of the fixing means that an operator decides to use, either a standard screw and plug assembly or a nail applied by a nailing tool or nail gun by direct impact, indistinctly, and without the need to attach accessory pieces that make the product more expensive and increase the handling time.

Preferably, said tool comprises a nose part of a nail gun, either a pneumatic or electrical nail gun, and wherein said nose part is configured and dimensioned to be able to access the window for said bracket to be centred and fastened to the nose part by said centring and fastening means of the bracket arranged adjacent to the at least one through hole.

By direct impact fixing means, it shall be understood means such as a nail gun or nailing device, either pneumatic or electric, adapted to apply nails to a surface by direct impact.

By nose part, it shall be understood a tool of direct impact fixing means, preferably, a part, for example a separated part, located at the front of the nail gun or nailing device. Again preferably, the nose part comprises a distal end portion or contact tip of the nail gun. The user initiates firing when said contact tip contacts the work surface and the trigger is pulled.

In a possible embodiment, the centring and fastening means comprise at least one protrusion arranged and configured to tightly house the mouth or nose part of the direct impact fixing tool so that the bracket is supported on the tool during installation. For example, the centring and fastening means may comprise a single circular protrusion or two semi-circular protrusions, symmetrical to each other with respect to a plane coincident with an axis of at least one through hole.

Advantageously, the centring and fastening means comprise at least two protrusions arranged concentrically to the at least one through-hole to tightly house the nose part of the tool of said direct impact fixing means.

For one embodiment, said at least one or two protrusions comprise at least one fastening lug extending in a radial direction towards the at least one through hole for said bracket to be fastened to the nose part of the tool when a distal end of said nose part is in contact with said at least one fastening lug.

Preferably, said fastening lugs are arranged radially opposite to each other such that an outer diameter of the distal portion of the nose part is higher than the distance between the opposite fastening lugs for said fastening lugs to fasten the bracket to the distal end portion of the nose part.

According to a preferred embodiment, the closing means comprise, on the one hand, an eyelet and, on the other hand, a clamp configured to be removably anchored to the eyelet. In a possible implementation, the bracket comprises an articulation configured so that the clamp is articulable with respect to the portion of piece to which it is attached, facilitating the anchoring of the clamp to the eyelet in a removable manner. Preferably, the aforementioned articulation is defined by a section of the bracket whose thickness is sufficiently narrow to be flexible when manually forced.

Again preferably, the clamp is configured to release from the eyelet when pressed laterally, allowing a more compact implementation in relation to the state of the art. For example, the clamp comprises:
- two retaining hooks projecting laterally in opposite directions from the front end of the clamp,
- two release tabs extending from the retaining hooks towards the rear end of the clamp, and
- two articulations configured to articulate both respective retention hooks together with two release tabs so that the retention hooks are retained against the eyelet when the front end of the clamp is inserted into the eyelet, and the release tabs are not laterally pressed towards each other, and so that the retention hooks move closer to each other and are released with respect to the eyelet when the release tabs are laterally pressed against each other.

For an embodiment, the second portion of piece comprises a first section extending at an angle, preferably, extending obliquely, from the first portion of piece and a second section extending from the first section arranged parallel to the first portion of piece, with at least the second section being provided with the access window facing the through hole of the first portion of piece. Preferable, in this manner, the support acquires a substantially rectangular or "U" -shaped geometry, which fits better at the corners.

In an optional embodiment, the first section of the second portion of piece comprises at least one further through hole so that it can be fixed in contact with a corresponding wall or ceiling surface. In this latter embodiment, the second portion of piece preferably comprises centring and fastening means arranged adjacent to the further at least one through hole and intended to centre and fasten the bracket to the tool of the direct impact fixing means.

Preferably, the piece is a single piece; that is, it constitutes the bracket itself, and advantageously, it is made entirely of plastic, so it is easily and economically produced by moulding.

In summary, the present bracket facilitates its fixing to walls and ceilings using direct impact fixing means tools, without additional pieces and with a single shot, while allowing its fixing with standard screws and plugs on different types of materials, whether concrete, wood, etc. At the same time, it has an easy and compact closing system, whose design is smaller than the brackets of the state the art.

### Brief description of the drawings

Figure 1.- Is a perspective view of a first embodiment of the present bracket, where the first portion of piece is shown at the top and where the clamp is inserted in the eyelet, that is, in a closed position. For the sake of clarity, the bracket has been shown without cables.
Figure 2.- Is a perspective view of the first embodiment, rotated with respect to figure 1 so that the first portion of piece is now located to the right and with a screw inserted through its through hole and into a plug. In this figure, the clamp is open.
Figure 3.- Is a perspective view of the first embodiment of figure 1, similar to that of figure 2, but instead of providing a screw, in this case, the mouth or nose part of a nailing device is shown inserted through the window of the second portion of piece and fastening the bracket.
Figure 4.- Is a perspective view of a second embodiment of the present bracket, where the first portion of piece is shown located on the right and with a screw inserted in one of its through holes and into a plug. For the sake of clarity, this second embodiment has also been represented without cables.
Figure 5.- Is a perspective view of the second embodiment of figure 4, similar to that of figure 4, but instead of having a screw, the mouth or nose part of a nailing device inserted through one of the windows of the second portion of piece and fastening the bracket has been represented in this case.

### Description of a preferred embodiment

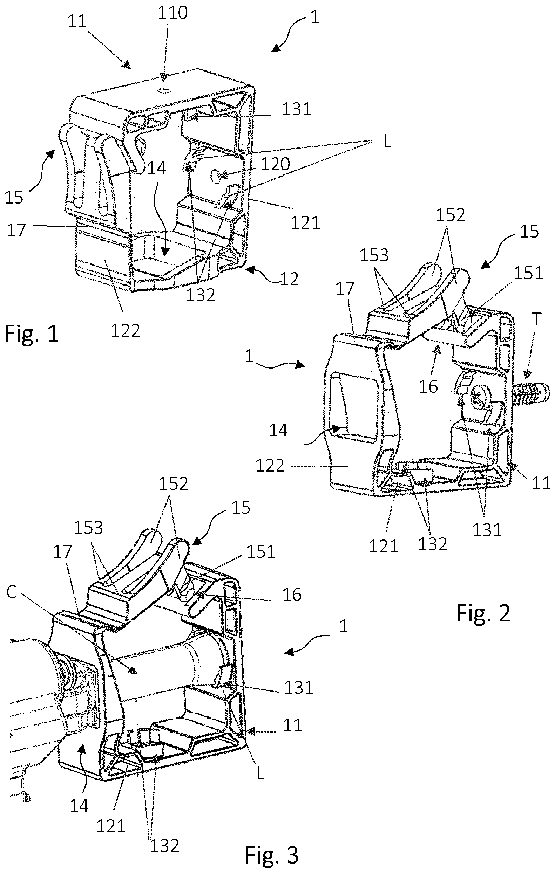

The cable bracket and fixing assembly of the present invention is described below referring to the non-limiting embodiments shown in figures 1 to 5. As can be seen in the figures, the bracket is defined by a single piece (1), which can be fixed to the surface of a wall or a ceiling using standard fixing means, for example, by conventional plug and screw assemblies.

The disclosed embodiments show a fixing assembly comprising the bracket and a tool (C) of direct impact fixing means wherein said direct impact fixing means are a nail gun, either a pneumatic or electrical nail gun. In particular, the tool (C) comprises a nose part of a nail gun, either a pneumatic or electrical nail gun.

A first embodiment of the piece (1) is illustrated in figures 1 to 3, which comprises:
- a first portion (11) of piece (1),
- a second portion (12) of piece (1) provided with a first section (121) that extends obliquely from one end of the first portion (11) of piece (1), and with a second section (122) extending parallel to the first portion of piece (11), and
- closing means (15, 16) defined by a clamp (15) and an eyelet (16), allowing the removable attachment of the said first portion (11) of piece (1) to the said second portion (12) of piece (1), thus configuring an annular body suitable for wrapping a set of cables.

As can be seen in figure 1, both the first portion (11) of piece (1) and the second portion (12) of piece comprise each through holes (110, 120) that allow the bracket to be fixed to a wall or ceiling surface either using standard fixing means, which have been represented in figure 2 by a screw (T) inserted into a plug, or using a nailing tool (C) of a direct impact fixing means, which has been represented in figure 3 as a nose part of the direct impact fixing means.

To allow the access of the direct impact fixing means to the through hole (110) of the first portion (11) of piece (1), the second section (122) of the second portion (12) of piece (1) is provided with a window (14) dimensioned to allow access of the mouth or nose part of the direct impact fixing means, as shown in figure 3.

Adjacent to the through holes (110, 120), the piece (1) of this first embodiment comprises centring and fastening means (131, 132) in the form of semi-circular protrusions arranged symmetrical to each other with respect to a plane coincident with an axial axis of the respective through hole (110, 120). These centring and fastening means (131, 132) include fastening lugs (L) configured to tightly house the mouth or nose part of the tool to centre and fasten the piece (1) to the direct impact fixing means during the positioning of the piece (1) on the corresponding surface.

In this first embodiment, the bracket comprises a joint or articulation (17) configured so that the clamp (15) is articulable with respect to the second portion (12) of piece (1) to which it is attached, thus facilitating the anchoring and removal of the clamp (15) with respect to the eyelet (16).

As shown in figures 2 and 3, the clamp (15) of this first embodiment comprises:
- two retaining hooks (151) projected laterally in opposite directions from the front end of the clamp (15),
- two release tabs (152) extending from the retaining hooks (151) towards the rear end of the clamp (15), and
- two articulations (153) configured to articulate both retention hooks (151) together with each release tabs (152), so that the retention hooks (151) are retained against the eyelet (16) when the front end of the clamp is inserted into the eyelet and the release tabs are not laterally pressed towards each other, and so that the retention hooks (151) move closer to each other and are released with respect to the eyelet (16) when the release tabs (152) are laterally pressed against each other.

Preferably, the bracket is defined by a single piece (15) made entirely of plastic, the joints or articulations (17, 153) being defined by sections of the bracket whose thicknesses are sufficiently narrow and long to be flexible when manually forced.

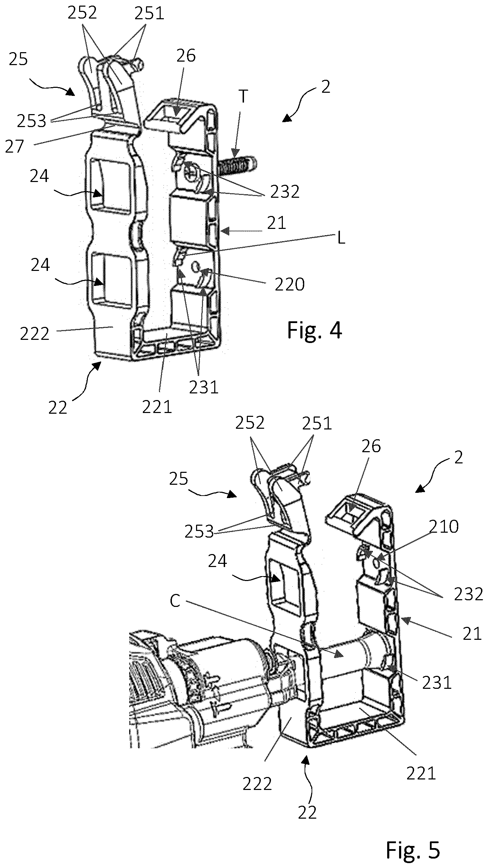

A second embodiment of the piece (2) is illustrated in figures 4 and 5, which comprises:
- a first portion (21) of piece (2),
- a second portion (22) of piece (2) provided with a first section (221) that extends obliquely from one end of the first portion (21) of piece (2), and with a second section (222) that extends parallel to the first portion (21) of piece, and
- closing means (25, 26) defined by a clamp (25) and an eyelet (26), that permits the removable attachment of the said first portion (21) of piece (2) to the said second portion (22) of piece (2), thus configuring an annular body suitable for wrapping a set of cables.

As can be seen in the figures of this second embodiment, the first portion (21) of piece (2) comprises two through holes (210, 220) that allow the bracket to be fixed to a wall or ceiling surface either by using standard fixing means, which have been represented in figure 4 by means of a screw (T) inserted into a plug, or by using a nailing tool (C) of direct impact fixing means, which has been represented in figure 5 as a nose part of said direct impact fixing means.

To allow access of the direct impact fixing means to the through holes (210, 220) of the first portion (21) of piece (2), the second section (222) of the second portion (22) of piece (2) is provided with two windows (24) dimensioned to allow access of the mouth or nose part of a nail gun, as shown in figure 5.

Adjacent to the through holes (210, 220), the piece (2) of this second embodiment comprises centring and fastening means (231, 232) in the form of semi-circular protrusions with fastening lugs (L) configured to tightly house the mouth or nose part of the direct impact fixing means to centre and fasten the piece (2) to the nail gun during the positioning of the piece (2) on the corresponding surface.

In this second embodiment, the bracket comprises a joint or articulation (27) configured so that the clamp (25) is articulable with respect to the second portion (22) of piece (2) to which it is attached, thus facilitating the anchoring and removal of the clamp (25) with respect to the eyelet (26).

As shown in figures 4 and 5, the clamp (25) of this second embodiment comprises:
- two retaining hooks (251) projected laterally in opposite directions from the front end of the clamp (25),
- two release tabs (252) extending from the retaining hooks (251) towards the rear end of the clamp (25), and
- two articulations (253) configured to articulate both retention hooks (251) together with respective release tabs (252) so that the retention hooks (251) are retained against the eyelet (26) when the front end of the clamp is inserted into the eyelet and the release tabs are not laterally pressed towards each other, and so that the retention hooks (251) move closer to each other and are released with respect to the eyelet (26) when the release tabs (252) are laterally pressed against each other.

Although reference has been made to a specific embodiment of the invention, it is evident to a person skilled in the art that the described bracket is susceptible to numerous variations and modifications and that all the aforementioned details can be replaced by other technically equivalent ones, without departing from the scope of protection defined by the attached claims.

## Claims

1. Bracket for supporting a set of cables, the bracket being defined by a piece (1, 2), which comprises:
- a first portion (11, 21) of piece (1, 2) provided with at least one through hole (110, 210, 220) to fix the said first portion (11, 21) of piece (1, 2) to a surface of a wall or ceiling by standard fixing means (T),
- a second portion (12, 22) of piece (1, 2) that extends from an end of the first portion (11, 21) of piece (1, 2) towards the other end of this first portion (11, 21) of piece (1, 2) to configure a bracket surface for the said set of cables, the second portion (12, 22) of piece (1, 2) being provided with at least one access window (14, 24) to the said at least one through hole (110, 210, 220), wherein said window (14, 24) is dimensioned to allow the access of a tool (C) of a direct impact fixing means, and
- closing means (15, 16, 25, 26) for removably attaching the first portion (11) of piece (1) to the second portion (12) of piece (1),
**characterised by** the fact that the first portion (11,21) of piece (1, 2) comprises centring and fastening means (131, 231, 232) arranged adjacent to the at least one through hole (110, 210, 220) and intended to centre and fasten the bracket to the tool (C) of the direct impact fixing means.

2. Bracket for supporting a set of cables according to claim 1, **characterised in that** the centring and fastening means (131, 231, 232) comprise at least one protrusion arranged and configured to tightly house a nose part of said tool (C) of the direct impact fixing means so that the bracket can be supported on the tool (C) during positioning on the corresponding surface.

3. Bracket for supporting a set of cables according to claim 2, wherein said centring and fastening means (131, 231, 232) comprise at least two protrusions arranged concentrically to the at least one through-hole (110, 210, 220) to tightly house the nose part of the tool (C) of said direct impact fixing means.

4. Bracket for supporting a set of cables according to claim 3, **characterised in that** the centring and fastening means (131, 231, 232) comprise two semi-circular protrusions arranged symmetrical to each other with respect to a plane coincident with an axial axis of the at least one through hole (110, 210, 220).

5. Bracket for supporting a set of cables according to any of claims 2 to 4, **characterized in that** said at least one or two protrusions (121, 231, 232) comprise at least one fastening lug (L) extending in a radial direction towards the at least one through hole (110, 210, 220) for said bracket to be fastened to the nose part of the tool (C) when a distal end of said nose part is in contact with said at least one fastening lug (L).

6. Bracket for supporting a set of cables according to any of the preceding claims, **characterised in that** the closing means comprise, on the one hand, an eyelet (16, 26) and, on the other hand, a clamp (15, 25) configured to be removably anchored to the eyelet (16, 26).

7. Bracket for supporting a set of cables according to claim 6, **characterised in that** it comprises an articulation (17, 27) configured so that the clamp (15, 25) can be articulated with respect to the second portion (12, 22) of piece (1, 2) to which it is attached to facilitate the anchoring of the clamp (15, 25) to the eyelet (16, 26) in a removable manner.

8. Bracket for supporting a set of cables according to claims 6 or 7, **characterised in that** the clamp (15, 25) is configured to be released from the eyelet (16, 26) by being pressed laterally.

9. Bracket for supporting a set of cables according to claim 7, **characterised in that** the clamp (15, 25) comprises:
- two retaining hooks (151, 251) projected laterally in opposite directions from the front end of the clamp (15, 25),
- two release tabs (152, 252) extending from the retaining hooks (151, 251) towards the rear end of the clamp (15, 25), and
- two articulations (153, 253) configured to articulate both retention hooks (151, 251) together with each release tabs (152, 252) so that the retention hooks (151, 251) are retained against the eyelet (16, 26) when the front end of the clamp (15, 25) is inserted into the eyelet (16, 26) and the release tabs (152, 252) are not laterally pressed towards each other, and so that the retention hooks (151, 251) move closer to each other and are released with respect to the eyelet (16, 26) when the release tabs (152, 252) are laterally pressed against each other.

10. Bracket for supporting a set of cables according to any of the preceding claims, **characterised in that** the second portion (12, 22) of piece (1, 2) comprises a first section (121, 221) extending at an angle from the first portion (11, 21) of piece (1, 2) and a second section (122, 222) extending from the first section (121, 221) arranged parallel to the first portion (11, 21) of piece (1, 2), at least the second section (122, 222) being provided with the at least one access window (14, 24) facing the through hole (110, 210, 220) of the first portion (11, 21) of piece (1,2).

11. Bracket for supporting a set of cables according to claim 10, **characterised in that** the first section (121) of the second portion (12) of piece (1) comprises at least one further through hole (120).

12. Bracket for supporting a set of cables according to claim 11, **characterised in that** the second portion (12) of piece (1) comprises centring and fastening means (132) arranged adjacent to said further through hole (120) and intended for centring and fastening the bracket to the tool (C) of the direct impact fixing means.

13. Bracket for supporting a set of cables according to any of the preceding claims, **characterised in that** the piece (1, 2) is a single piece that is integrally made of plastic.

14. Fixing assembly comprising a bracket according to any of claims 1 to 13 and a tool (C) of a direct impact fixing means, wherein said tool (C) is configured and dimensioned to be able to access the window (14, 24) for said bracket to be centred and fastened to the tool (C) by said centring and fastening means (131, 231, 232) of the bracket arranged adjacent to the at least one through hole (110, 210, 220).

15. Fixing assembly according to claim 14, wherein said tool (C) comprises a nose part of a nail gun, either a pneumatic or electrical nail gun, and wherein said nose part is configured and dimensioned to be able to access the window (14, 24) for said bracket to be centred and fastened to the nose part by said centring and fastening means (131, 231, 232) of the bracket arranged adjacent to the at least one through hole (110, 210, 220).
